# EUROPÄISCHE PATENTSCHRIFT

(11) **EP 0 582 249 B1**
(45) Veröffentlichungstag und Bekanntmachung des Hinweises auf die Patenterteilung: **26.11.1997**
(21) Anmeldenummer: 93112350.9
(22) Anmeldetag: 02.08.1993
(51) Int. Cl.: B32B 27/08

(54) **Verbundplatte**
Composite panel
Panneau composite

(30) Priorität: 06.08.1992 DE 9210508 U
(43) Veröffentlichungstag der Anmeldung: 09.02.1994
(73) Patentinhaber: HOECHST AKTIENGESELLSCHAFT, 65929 Frankfurt am Main (DE)
(72) Erfinder: Löw, Wolfgang, D-65468 Trebur (DE)

(56) Entgegenhaltungen:
- EP-A- 0 454 520
- DE-A- 2 730 899
- GB-A- 2 081 723

## Beschreibung

Die Erfindung bezieht sich auf eine Verbundplatte aus Polypropylen und Polymethylmethacrylat, welche insbesondere für die Herstellung von Bade-und Duschwannen geeignet ist.

Badewannen, Duschwannen und Waschbecken werden auch aus einem Polyester-Glasfaser-Verbundwerkstoff, welcher mit einer Schicht aus Polymethylmethacrylat (PMMA) versehen ist, angefertigt. Die Herstellung erfolgt zum größten Teil manuell und ist deswegen sehr kostenintensiv.

Es bestand die Aufgabe, Polymethylmethacrylat auf einen anderen, preisgünstigen Träger aufzubringen, vorzugsweise im Extrusionsverfahren.

Gefunden wurde, daß sich Polypropylen mit Polymethylmethacrylat laminieren läßt, wenn als Zwischenschicht ein Blend aus einem bestimmten Polypropylen, einem Polymethylmethacrylat und einem Polypropylen-Maleinsäureanhydrid-Pfropfpolymerisat verwendet wird.

Die Erfindung betrifft somit die in den Ansprüchen beschriebene Verbundplatte.

Die Trägerschicht der Verbundplatte besteht aus einem Homo- oder Copolymerisat des Propylens mit einem Schmelzindex MFI 230/5 nach DIN 53 735 von 55 bis 65 g/10 min. Das Material der Trägerschicht kann 0 bis 50, vorzugsweise 20 bis 40 Gew.-Teile, bezogen auf das Polymere, verstärkender Füllstoffe, wie beispielsweise Talkum, Kreide, Glasfasern oder Glaskugeln, enthalten. Außerdem kann das Material der Trägerschicht noch die üblichen Zusätze wie Licht- und Wärmestabilisatoren, Pigmente, Gleitmittel, Flammschutzmittel und dergleichen in den üblichen und erforderlichen Mengen erhalten.

Die Oberschicht ist ein Polymethylmethacrylat mit einer Dichte von 1,15 bis 1,19 g/cm³ und einem Schmelzpunkt von ca. 132°C.

Die Zwischenschicht besteht aus einem Blend aus einem Homo- oder Copolymerisat des Propylens mit einem MFI 230/5 von 55 bis 65 g/10 min, einem Polymethylmethacrylat und einem Polypropylen-Maleinsäureanhydrid-Pfropfpolymerisat. Das Polymethylmethacrylat ist ein modifiziertes Acrylpolymer mit einem Gehalt von mindestens 96 % Polymethylmethacrylat und einem Schmelzpunkt oberhalb 93°C. Das Pfropfpolymerisat kann gewonnen werden durch Umsetzung von Polypropylen mit Maleinsäureanhydrid in Lösung bei erhöhter Temperatur und Ausfällen des Produktes. Das Produkt enthält im allgemeinen 0,1 bis 7 Gew.-% gepfropftes Maleinsäureanhydrid. Derartige Produkte sind im Handel erhältlich.

Der Blend besteht aus 10 bis 90, vorzugsweise ca. 50 Gew.-Teilen Polypropylen, 90 bis 10, vorzugsweise ca. 50 Gew.-Teilen Polymethylmethacrylat und 0,1 bis 1,0 Gew.-Teilen Pfropfpolymerisat.

Zur Herstellung der neuen Verbundplatte werden die Materialien für die einzelnen Schichten aufeinander extrudiert. Vorzugsweise wird dafür ein Mehrschichtextruder verwendet. Die Verbundplatte zeichnet sich durch eine sehr gute Haftung der einzelnen Schichten aneinander aus und kann danach durch Tiefziehen in Badewannen, Duschwannen oder Waschbecken und dergleichen geformt werden.

### Vergleichsbeispiel

Für die Trägerschicht wurde ein Propylen-homo-polymerisat mit einem MFI 230/5 von 0,4 bis 0,6 g/10 min, für die Zwischenschicht ein Blend aus dem gleichen Polypropylen und 0,5 Gew.-% käuflichem Polypropylen-Maleinsäureanhydrid-Pfropfpolymerisat und für die Deckschicht ein Polymethylmethacrylat (®Ovoglas; Rohm & Haas) eingesetzt. Die Materialien wurden auf einer Mehrschichtextrusionsanlage (Primärextruder 120 mm/30 D, Sekundärextruder 60 mm/25 D, Mittelschichtextruder 30 mm/25 D, Laminarverteilerdüse) zu einer Verbundplatte (Trägerschicht 2 mm, Zwischenschicht 0,1 mm, Deckschicht 0,5 mm) verarbeitet. Es zeigte sich, daß zwischen der Trägerschicht und der Deckschicht keine Haftung bestand.

### Beispiel

Das Vergleichsbeispiel wurde wiederholt, jedoch wurde für die Zwischenschicht ein Blend aus 94,8 Gew.-Teilen eines Polypropylens mit einem MFI 230/5 von 55 bis 65 g/10 min, 5 Gew.-Teilen eines Polymethylmethacrylats (®Paraloid EPR-9, Rohm & Haas) und 0,2 Gew.-Teilen eines käuflichen Polypropylen-Maleinsäureanhydrid-Pfropfpolymerisats verwendet. Man erhielt eine sehr gute Haftung zwischen der Trägerschicht und der Deckschicht.

## Patentansprüche

1. Verbundplatte bestehend aus einer Trägerschicht aus einem Propylen-homo- oder -copolymerisat, einer haftvermittelnden Zwischenschicht und einer Deckschicht aus einem Polymethylmethacrylat, dadurch gekennzeichnet, daß die Zwischenschicht aus einem Blend aus einem Homo- oder Copolymerisat des Propylens mit einem MFI 230/5 von 55 bis 65 g/10 min, einem Polymethylmethacrylat und einem Polypropylen-Maleinsäureanhydrid-Pfropfpolymerisat besteht.

2. Verwendung der Verbundplatte nach Anspruch 1 zum Herstellen von Badewannen, Duschwannen, Waschbecken und dergleichen.

3. Verfahren zum Herstellen einer Badewanne, Duschwanne oder Waschbecken durch Tiefziehen einer Verbundplatte, dadurch gekennzeichnet, daß man eine Verbundplatte aus einer Trägerschicht aus einem Propylen-homo- oder copolymerisat, einer haftvermittelnden Zwischenschicht aus einem Blend aus einem Homo- oder Copolymerisat des Propylens mit einem MFI 230/5 von 55 bis 65 g/10 min, einem Polymethylmethacrylat und einem Polypropylen-Maleinsäureanhydrid-Pfropfpolymerisat und einer Deckschicht aus einem Polymethylmethacrylat einsetzt.

## Claims

1. A laminated sheet comprising a support layer of a propylene homo- or copolymer, an adhesion-promoting intermediate layer and a top layer of a polymethyl methacrylate, wherein the intermediate layer comprises a blend of a homo- or copolymer of propylene having an MFI 230/5 of 55 to 65 g/10 minutes, a polymethyl methacrylate and a polypropylene/maleic anhydride graft polymer.

2. The use of the laminated sheet as claimed in claim 1 for the production of baths, shower trays, wash-basins and the like.

3. A process for the production of a bath, shower tray or wash-basin by thermoforming a laminated sheet, which comprises employing a laminated sheet of a support layer of a propylene homo- or copolymer, an adhesion-promoting intermediate layer of a blend of a homo- or copolymer of propylene having an MFI 230/5 of 55 to 65 g/10 minutes, a polymethyl methacrylate and a polypropylene/maleic anhydride graft polymer and a top layer of a polymethyl methacrylate.

## Revendications

1. Panneau composite constitué d'une couche de support d'un homo- ou copolymère du propylène, d'une couche intercalaire assurant l'accrochage et d'une couche extérieure d'un poly(méthacrylate de méthyle), caractérisé en ce que la couche intercalaire est constituée d'un mélange d'un homo- ou copolymère du propylène ayant un MFI 230/5 de 55 à 65 g/10 minutes, d'un poly(méthacrylate de méthyle) et d'un polymère greffé de polypropylène-anhydride maléique.

2. Utilisation du panneau composite selon la revendication 1 pour la fabrication de baignoires, de cuvettes de douche, d'éviers et analogues.

3. Procédé pour la fabrication d'une baignoire, d'une cuvette de douche ou d'un évier par emboutissage d'un panneau composite, caractérisé en ce que l'on utilise un panneau composite, constitué d'une couche de support d'un homo- ou copolymère de propylène, d'une couche intercalaire assurant l'accrochage en un mélange d'un homo- ou copolymère du propylène ayant un MFI 230/5 de 55 à 65 g/10 minutes, d'un poly(méthacrylate de méthyle) et d'un polymère greffé de polypropylène-anhydride maléique et d'une couche extérieure en un poly(méthacrylate de méthyle).
